# EUROPEAN PATENT APPLICATION

(11) **EP 1 591 306 A2**
(43) Date of publication of application: **02.11.2005**
(21) Application number: 05103416.3
(22) Date of filing: 27.04.2005
(51) Int. Cl.: B60N 2/28

(54) **Child seat**

(30) Priority: 28.04.2004 FI 20040603
(71) Applicant: Oy Klippan Ab, 01370 Vantaa (FI)
(72) Inventor: Martin, Bror, 01120 Västerskog (FI); Reponen, Ismo, 21100 Naantali (FI)
(74) Representative: Roitto, Klaus

(57) **Abstract**

The invention relates to a child seat comprising a basin-like inner part (1) for a child and a carrying handle (3) attached to the inner part, intended for carrying the child by lifting by the carrying handle, the carrying handle comprising a band-like elastic member (8) that can be positioned in a lifting position or alternatively in a storage position. In order for the carrying handle to be easily installable in the lifting position or alternatively in the storage position, and for the using convenience of the child seat to be good, the carrying handle (3) comprises two band-like elastic members (8), at first ends of which there are detachable locking members for locking the elastic members to each other, and at the opposite ends of which there are locking means for keeping the elastic members attached to the inner part (1) when the inner part is lifted by gripping the carrying handle (3); and the elastic members (8) are formed as branches, the rigidity of which against bending is sufficient to keep the carrying handle (3) in the lifting position when the locking members are attached to each other, and sufficient for pushing the branches into the inside of the child seat over most of the length of the branches through slots (9) in the child seat, to position the carrying handle (3) in the storage position.

## Description

### BACKGROUND OF THE INVENTION

The invention relates to a child seat comprising a basin-like inner part for a child and a carrying handle attached to the inner part, the child seat being intended for carrying the child by lifting by the carrying handle, the carrying handle comprising a band-like elastic member that can be positioned in a lifting position or alternatively in a storage position.

Publication DE 19805331 A1 discloses a child seat of the above type, intended to be used as a transport means for a child in vehicles. The inner part of this known child seat is detachably attached to the body of the child seat, which, in turn, is attached to a vehicle. The inner part can thus be used as a seat separate from the body, i.e. not supported by the body. With the inner part detached from the body, the child sitting in the inner part can be carried by lifting by the carrying handle. For this purpose, the carrying handle is formed of an elastic belt provided with an openable lifting ring.

One embodiment of the present invention comprises a child seat, like the child seat according to DE 19805331 A1, having a body to which the basin-like inner part is detachably attachable.

A drawback of the child seat according to DE 19805331 A1 is that the elastic belt cannot be easily taken off from the front of a sitting child, particularly when the child seat is attached to a separate body made for the child seat. A need to open the belt and to get it off from the front of the child arises for instance when the child is, for any reason, to be taken away from the seat. For example, the child needs to be taken away from the child seat for a short time when the child's clothes are to be changed in some way, or when a nappy is to be changed, or when the baby is to be fed. Getting the belt out of so that it does not cause any hindrance necessitates lifting the child seat off the body and turning the belt to the sides of the child seat. If the belt is left in front of the child without keeping an eye on the child, the belt causes a potential risk of throttling.

Also resetting the carrying handle in the lifting position from the position where it is completely out of the way from the front of the child is relatively time-consuming and complicated with the seat according to DE 19805331 A1.

Also such child seats are known where the carrying handle is formed of a rigid bar which is turnable, by means of a pivot, from the storage position into the lifting position, and vice versa. The inner part being attached to the body, the carrying handle is turned to the storage position, in which is completely out of the child's way. In the storage position, the carrying handle is turned to the sides of the backrest of the inner part. An advantage of a rigid bar is that it is easily installable into the lifting position, or alternatively into the storage position. A disadvantage of a rigid bar is that it is not convenient for gripping when the child is to be carried. This is because the handgrip is crosswise to the seat, and the position of the hand is thus not natural or comfortable. In addition, a disadvantage of a rigid bar is that it does not provide a convenient lifting grip if the child is to be carried over a longer distance by two people. Further, a drawback of a rigid bar is that it requires a complex brake mechanism to prevent the inner part from swinging in relation to the carrying handle to such an extent that there could be a risk of the child falling off the inner part when the inner part is carried by means of the carrying handle.

### BRIEF DESCRIPTION OF THE INVENTION

An object of the present invention is to provide a novel child seat, the carrying handle of which is easily installable in a lifting position or alternatively in a storage or resting position, and the use characteristics of which is significantly better than in known child seats when a child is to carried in the seat, and the structure of which is also fairly simple.

To implement this, the child seat according to the invention is characterized in that the carrying handle comprises two band-like elastic members, at first ends of which there are detachable locking members for locking the elastic members to each other, and at the opposite ends of which there are locking means for keeping the elastic members attached to the inner part when the inner part is lifted by gripping the carrying handle; that the elastic members are formed as branches, the rigidity of which against bending is sufficient to keep the carrying handle in the lifting position when the locking members are attached to each other, and sufficient for pushing the branches into the inside of the child seat over most of the length of the branches through slots in the child seat, to position the carrying handle in the storage position.

When the rigidity of the elastic members against bending fulfils the above requirement, a new grip on the carrying handle can be readily taken even if the grip has been released earlier. In addition, this rigidity facilitates the locking and opening of the locking members because it is easier to get a grip on the locking members (the locking members become always positioned at the same point relative to the inner part, and close to the user).

Preferably, the elastic members are bendable in a first plane but substantially rigid in a plane that is perpendicular to the first plane. Such a solution provides a simple way to prevent undesirable turning of the inner part relative to the lifting handle when the inner part is lifted.

The tendency to such undesirable turning can, in addition or alternatively, be prevented by providing slots at the transition region of the seat part and the backrest in such a way that the slots guide the elastic members so that their edges are uniformly subjected to stress when the inner part with the child is lifted to the desired carrying position by means of the carrying handle.

The locking members are preferably formed at handgrips at the ends of the elastic members.

Preferred embodiments of the child seat according to the invention are presented in the attached claims 2 to 10.

A great advantage of the child seat according to the invention is that its use characteristics are extremely good. Its carrying handle can be very easily positioned in the lifting position or alternatively in the storage position. If desired, the child can be carried by two people, and then it is easy to carry the child even longer distances. Further, the handgrip of the child seat cannot easily turn in relation to the inner part, which stabilizes the carrying when the child sitting in the inner part is lifted. Still further, the construction of the child seat is relatively simple.

### BRIEF DESCRIPTION OF THE FIGURES

The invention will now be described in greater detail by means of one preferred embodiment, with reference to the attached drawing, in which
Figure 1 shows a child seat according to prior art;
Figure 2 shows a child seat according to the invention, having the carrying handle in the storage position, i.e. passive position; and
Figures 3 and 4 illustrate the lifting position and functioning of the carrying handle in the inner part of Figure 2.

### DETAILED DESCRIPTION OF THE INVENTION

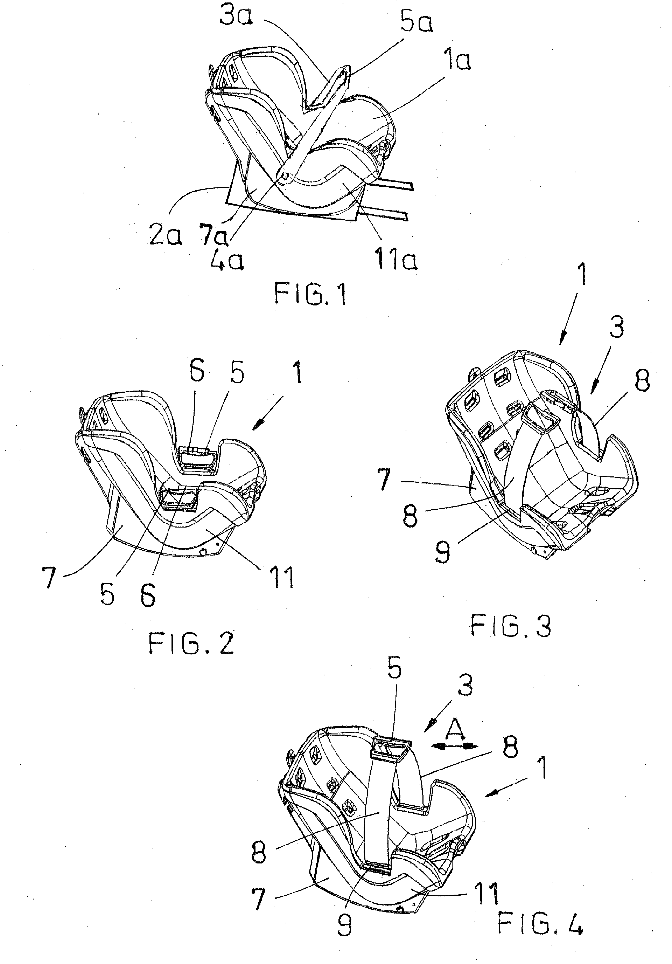

A child seat representing a known structure is shown in Figure 1. It comprises a body 2a to be attached to a car or other vehicle, and a basin-like inner part 1a for receiving a small child or a baby. The basin-like inner part 1a is attached to the body 2a with locking means, preferably with quick-locking means. The body 2a can be attached to a car or other vehicle. The inner part 1a comprises a shell 11 a under or behind which there is padding 7a.

Reference numeral 3a indicates a carrying handle turned in the figure to a lifting position, i.e. away from a storage or resting position in which it is positioned against the sides of the backrest of the inner part 1a. When the handgrip 5a of the carrying handle 3a is gripped, the inner part 1a with the child (not shown) can be carried. Reference numeral 4a indicates a pivot that allows said turning of the carrying handle 3a.

Figure 2 shows the inner part 1 according to the invention, comprising a shell 11, under or behind which there is a somewhat rigid padding 7 capable of dampening impact energy. The inner part 1 is preferably covered with padding, which is not, however, shown in the figures. The inner part 1 is attachable to a body, for instance to a body similar to the one shown in Figure 1, with locking means (not shown). The inner part 1 in Figure 2 also comprises a carrying handle, although only the handgrips 5 are visible in the figure. The carrying handle is clearly shown in Figures 3 and 4. The handgrips 5 comprise elongated gripping parts 6 which are arranged at the transition region of the seat part and the backrest of the inner part 1. There are slots (see Figure 3, reference numeral 9) extending from this transition region and leading to the space between the shell 11 of the inner part 1 and the padding 7 behind, i.e. under it. It can be seen from the figure that the handgrips 5 become predominantly positioned inside the contours of the inner part 1 in such a way that they do not protrude from the inner part, remaining thus out of the way.

Figures 3 and 4 illustrate the structure of the carrying handle 3 of the inner part 1. The carrying handle 3 comprises band-like elastic members 8 positioned on both sides of the inner part 1 and pulled out from the inner part through the slots 9 in the padding 7. A slot refers in this context to any opening or the like through which the elastic members 8 can be guided. The elastic members 8 are manufactured of plastic. In the solution of Figures 2 to 4, the carrying handle is formed of the elastic members 8 with the handgrips 5 (2 pieces). The elastic members 8 can be called branches. In Figure 3, the handgrips 5 at the ends of the elastic members 8 are not locked to each other. The inner part 1 with the child can be carried by two people by bending the branches 8 outwards to the sides of the inner part. One person carries by the left carrying handle and another person by the right carrying handle. In Figure 4 the handgrips 5 at the ends of the elastic members 8 are locked to each other. For this purpose, the handgrips 5 comprise locking members. One of the handgrips comprises a pin positioned in the direction of the handgrip, capable of being guided into the inside of a recess in the other handgrip. The recess is positioned in the direction of the handgrip. Preferably, the locking means comprise click or snap joints in which the pins are locked into the recesses. The structure of the locking members is not described here in more detail, as a person skilled in the art will have no difficulties in designing locking members with which the handgrips 5 can be detachably attached to each other.

Although in Figure 4 the handgrip 5 is not gripped, the carrying handle 3 stays in the upright position of the figure. This property is achieved by selecting the rigidity of the elastic members 8 to be so great that their resistance to bending is sufficient to keep the carrying handle 3 in the lifting position when the handgrips 5 of the carrying handle are attached to each other. The rigidity of the elastic members 8 of the carrying handles is also sufficient for the elastic members to be pushed inside the openings 9 to the storage position. Due to this, the elastic members 8 are preferably not woven, because then it would be very difficult to achieve the desired rigidity.

The padding 7 of the inner part 1 is provided with locking means preventing the elastic members 8 from detaching from the padding when the seat is lifted by gripping the handgrip 5. Due to this, the elastic members 8 cannot be pulled out of the padding in such a way that a given distance, for example 400 mm, would be exceeded. The maximum length of each elastic member 8 is preferably 300 to 600 mm. The structure of the locking members is not described in greater detail in this context, as it will not be difficult for a person skilled in the art to design such members.

When the elastic members 8 have been pulled to the position of Figure 3, the locking members in the padding 7 prevent, together with the rigidity of the elastic members, the elastic members 8 from moving or bendi ng in the directions of double arrow A of Figure 4. Owing to this, when the inner part 1 with the child is lifted by means of the carrying handle 3 to the balance position, the inner part 1 cannot turn in relation to the carrying handle 3 but stays steady, and thus the child cannot fall off the inner part due to gravity.

Above, the child seat has been described by means of only one preferred embodiment, and therefore it is to be noted that its details may vary in a plurality of ways within the scope of the attached claims. Thus, the design of the inner part 1 and the handgrips 5 of the carrying handle 3 can deviate from what is described. It is feasible that the position of the handgrips is different from what is presented, but the presented position is particularly recommendable because the slot in the inner part guides the elastic members in such a way that their edges are uniformly subjected to stress when the inner part with the child is lifted by means of the carrying handle and when the inner part is in balance.

The child seat does not necessarily have to be a safety seat used in a car or other vehicle but it may, in principle, be any child seat. Thereby, it needs not comprise a body to which the inner part 1 is attached; in other words, the body 2a of Figure 1 for attaching the inner part to a vehicle is not needed.

## Claims

1. A child seat comprising a basin-like inner part (1) for a child and a carrying handle (3) attached to the inner part, the child seat being intended for carrying the child by lifting by the carrying handle, the carrying handle comprising a band-like elastic member (8) that can be positioned in a lifting position or alternatively in a storage position, **characterized in that**
- the carrying handle (3) comprises two band-like elastic members (8), at first ends of which there are detachable locking members for locking the elastic members to each other, and at the opposite ends of which there are locking means for keeping the elastic members attached to the inner part (1) when the inner part is lifted by gripping the carrying handle (3);
- that the elastic members (8) are formed as branches, the rigidity of which against bending is sufficient to keep the carrying handle (3) in the lifting position when the locking members are attached to each other, and sufficient for pushing the branches into the inside of the child seat over most of the length of the branches through slots (9) in the child seat, to position the carrying handle (3) in the storage position.

2. A child seat according to claim 1, **characterized in that** the elastic members (8) are bendable in a first plane but substantially rigid in a plane that is perpendicular to the first plane.

3. A child seat according to claim 1, **characterized in that** the rigidity of the elastic members (8) against bending is sufficient to keep the carrying handle (3) in the lifting position when the detachable locking members are attached to each other.

4. A child seat according to claim 1, **characterized in that** the elastic members (8) are arranged between padding (7) and a shell (11) of the child seat when the carrying handle (3) is in the storage position.

5. A child seat according to claim 1, **characterized in that** the locking members are formed at handgrips (5) at the ends of the elastic members (8).

6. A child seat according to claim 5, **characterized in that** the handgrips (5) comprise an elongated gripping part (6).

7. A child seat according to claim 1, **characterized in that** the handgrips (5) are arranged to become positioned at least primarily inside the contours of the child seat when the carrying handle (3) is in the storage position.

8. A child seat according to claim 1 or 2, **characterized in that** the slots (9) are provided at the transition region of the seat part of the child seat and the backrest of the child seat and arranged to guide the elastic members (8) in such a way that their edges are uniformly subjected to stress when the inner part (1) with the child is lifted by means of the carrying handle (3).

9. A child seat according to any one of the preceding claims, **characterized in that** it comprises a body to which the basin-like inner part (1) is attached detachably.

10. A child seat according to claim 1, **characterized in that** the length of each elastic member (8) is 300 to 600 mm.
